# EUROPEAN PATENT APPLICATION

(11) **EP 2 017 915 A1**
(43) Date of publication of application: **21.01.2009**
(21) Application number: 07425424.4
(22) Date of filing: 09.07.2007
(51) Int. Cl.: H01M 8/04, H01M 8/00

(54) **Self-humidifying PEM-fuel-cell-based back-up electric generator**

(71) Applicant: Electro Power Systems S.p.A., 10091 Alpignano (IT)
(72) Inventor: Cherchi, Pierpaolo, 10141 Torino (IT); Gianolio, Giuseppe, 14010 Cellarengo (IT); Borello, Luisa, 10093 Collegno (IT); Mercante, Luca, 10141 Torino (IT); Musso, Andrea, 10095 Grugliasco (IT)
(74) Representative: Plebani, Rinaldo

(57) **Abstract**

Back-up electric generator, comprising a stack of PEM fuel cells; means for supplying hydrogen and an oxidising gas, both pressurised at a predetermined value; wherein hydrogen and the oxidising gas are supplied to the stack in stoichometric excess and the excess is at least partly re-circulated towards the stack; and humidification means to maintain in the hydrogen and/or oxidising gas supplied to the stack a degree of humidification suitable for the correct operation of the PEM fuel cells of the stack. The humidification means consist exclusively of first recirculation means of a first predetermined portion of the excess of hydrogen towards an anode compartment of the PEM fuel cells and of second recirculation means of a first predetermined portion of the excess of oxidising gas towards a cathode compartment of the cells. The first and second recirculation means are such that the first portions of the excess of hydrogen and oxidising gas that are re-circulated represent a predetermined part of the flow of hydrogen and, respectively, oxidising gas entering the stack such as to enable the maintaining in the entering flow of the degree of humidification suitable for a correct operation stack solely at the expense of water generated by the reaction of hydrogen oxidation occurring in said stack.

## Description

The present invention refers to a fuel cell electric generator specifically designed for back-up in the absence of network electricity supply, wherein a plurality of fuel cells are piled into a stack to generate electricity by being supplied with a combustible gas and an oxidising gas, on a fuel electrode (anode) and an oxidation electrode (cathode) respectively.

In particular, the invention refers to a system employing fuel cells of the proton exchange membrane (PEM) type and which makes use of hydrogen as a fuel, wherein a particular management of the PEM fuel cell humidification is carried out.

Maintaining a correct humidification is one of the most delicate aspects as concerns the management of a system for the generation of electric and thermal energy based on PEM fuel cell technology.

Fuel cells represent one of the most technologically promising solutions for the use of hydrogen as an energy vector. They are devices which can, by taking advantage of an electrochemical reaction, convert chemical energy into electric power.

In a single PEM cell there take place simultaneously two hemi-reactions, at the anode and at the cathode respectively. Anode and cathode of a PEM fuel cell are separated by an electrolyte, typically consisting of a membrane of a sulphonated polymer capable of conducting protons, whose opposite sides are coated with a layer of a suitable catalytic mixture (e.g. Pt-based).

The electrolyte is generally saturated with a ionic transportation fluid (e.g. water) so that hydrogen ions can travel thereacross from anode to cathode.

The overall reaction taking place in a fuel cell is:

2H₂ + O₂ → 2H₂O (1)

which is accompanied by the development of heat and electric energy and which results from the sum of two hemireactions occurring, respectively, at the anode:

2H₂ → 4H⁺ + 4e⁻ (2)

and at the cathode:

O₂ + 4H⁺ + 4e⁻ → 2H₂O. (3)

At the anode, then, there is supplied hydrogen which diffuses within the catalytic layer and there dissociates into hydrogen ions and electrons, which, the membrane being impermeable to them, travel across an external electric circuit towards the cathode, generating an electric current and the corresponding potential difference. At the cathode there is supplied a gaseous mixture containing oxygen which reacts with the hydrogen ions which have travelled across the electrolyte and the electrons coming from the external electric circuit.

It is necessary that the reacting gases be humidified because it is thanks to the water molecules that the passage of protons across the polymeric membrane occurs: too low a degree of humidification leads to a reduced passage of protons from the anode compartment to the cathode compartment with a consequent worsening of the fuel cell performance, whereas too high a degree of humidification may cause the occlusion of the catalytic sites with a consequent deterioration of the fuel cell performance. The humidification of the reacting gases is therefore a very delicate parameter in the management of a fuel cell system.

Since there is associated a well defined voltage to reaction (1), in order to achieve higher voltages, a plurality of elements are generally connected in series to form a stack.

In addition to the stack, a fuel cell electric generator designed for back-up in the absence of network electricity supply comprises a hydraulic circuit (pump, piping, dissipators, etc.), gaseous currents feed and discharge circuits (hydrogen feed piping, air feed piping, etc.), a control system (control unit, temperature, flow and pressure gauges, actuators, etc.). The ensemble of all the above elements constituting the remaining part of the fuel cell generator, reference is made, here and in the following, as BoP (i.e. "Balance of Plant").

In many embodiments of such a system, the BoP comprises a humidification device which enables recovery of water produced during the process and the transfer thereof to the flow of gas entering the stack. This device generally consists of a series of polymeric membranes which allow the transfer of water molecules from the exiting gas, which passes on one side on the membrane, to the entering gas, which passes on the other side of the membrane. Some embodiments provide, further, for recirculation and mixing with the "fresh" gas of at least part of the flow exiting the stack through the employment of a fan or pump, which entails, though, a decrease in the efficiency and an increase of noisiness of the system, along with an increase in the risk of failures.

Finally, air is generally used as the cathode gas, therefore either a fan or a pump is needed to supply the stack overcoming the head losses of the cathode circuit itself.

A system including all of the above characteristics is known e.g. from US-A-5543238. In that system a recirculation is performed, by means of compressors, of part of both the cathode exiting gas and the anode exiting gas; however a humidification system is needed, which operates by means of an external source of humidity.

As can be immediately inferred from what described thus far, the known embodiments of back-up electric generation system are relatively expensive and require accurate and careful routine maintenance to prevent them from becoming unreliable, because since they are back-up systems, i.e. they are designed for intervening only occasionally, for example the moving parts (pumps, compressors, etc.) need accurate controls so as to not be out of order just when the time of need comes.

Further, the known systems provide for the use of a humidification system, either working with water brought from outside or where water is partly recovered through the mentioned membrane exchangers.

It is an object of the present invention to provide a specifically back-up designed fuel cell electric generator, which overcomes the above drawbacks, in particular allowing the reduction of plant and management costs as well as the increase of efficiency and reliability of the generator, while at the same time reducing the bulkiness thereof.

It is therefore an object of the present invention to provide a back-up PEM fuel cell electric generator as defined in claim 1.

It is a further object of the present invention to provide a method for the management of a fuel-cell stack that enables the easy, simple and efficient humidification thereof.

There is therefore provided, according to the invention, a method for the management of a stack of PEM fuel cells as defined in claim 9.

In particular, a back-up electric generator according to the invention comprises:
- a stack of said PEM fuel cells;
- means for supplying to the stack hydrogen and an oxidising gas, both pressurised at a predetermined value; wherein the hydrogen and the oxidising gas are supplied to the stack in stoichometric excess and the excess is at least partly re-circulated towards the stack; and
- humidification means to maintain in the hydrogen and/or oxidising gas supplied to the stack a degree of humidification suitable for the correct operation of the PEM fuel cells of the stack.

According to an aspect of the invention, the humidification means consist exclusively of first recirculation means of a first predetermined portion of said excess of hydrogen towards an anode compartment of the PEM fuel cells and of second recirculation means of a first predetermined portion of said excess of oxidising gas towards a cathode compartment of the PEM fuel cells; the first and second recirculation means are such that the first portions of the excess of hydrogen and oxidising gas that are re-circulated represent a predetermined part of the flow of hydrogen and, respectively, oxidising gas entering the stack such as to enable the maintaining, in the entering flow, of said degree of humidification suitable for a correct operation of the PEM fuel cells of the stack only at the expense of water generated by the reaction of hydrogen oxidation occurring in the stack; the first and second recirculation means operate simultaneously, in parallel.

The first and second recirculation means are such to perform a direct mixing of the first portions of the excess of hydrogen and oxidising gas within the flow of hydrogen and, respectively, oxidising gas, entering the stack, and consist in ejectors, arranged immediately upstream to said anode and cathode compartments, such as to be flown through by the flow of hydrogen and, respectively, of oxidising gas entering the stack, which generate a local depression such as to draw from the stack, through respective anode and cathode recirculation branches arranged in parallel to the ejectors, the first portions of the excess of hydrogen and oxidising gas exiting the anode and cathode compartments.

According to another aspect, strongly preferred, of the invention, there is used technically pure oxygen instead of air as cathode gas, by drawing it directly from a pressurised cylinder.

Thus, according to the inventions there is made a remarkable simplification of the BoP of the back-up PEM fuel cell generator with respect to the prior art: several machine parts in motion (e.g. pumps, fans, external humidification devices) are eliminated from the system.

Consequently, the back-up power generator being equal, several advantages are achieved with respect to the prior art:
- reduced overall size and weight, because the generator comprises less cumbersome auxiliary elements (pumps, fans) and, at the same time, power and efficiency of the generator being equal, the stack has dimensions about half as great as a stack using air as the cathode reagent;
- increased overall efficiency, because the generator comprises a more limited number of auxiliary elements to be powered;
- greater simplicity of the system manufacture and management;
- reduced start-up times, which prove to be not bound by the fan inertia, because the oxygen concentration is substantially equal to 100%;
- reduced noisiness because there are no pumps or fans in the anode and cathode circuits;
- increased overall reliability of the system, because there are less components with machine moving parts;
- simplified maintenance procedures as a consequence of the above advantages;
- reduced manufacture costs because some expensive components used in the prior art are eliminated, and those introduced for the recirculation entail lesser costs; further, components already present according to the prior art are used in a more efficient way;
- altitude does not influence the back-up system efficiency and does not originate any decrease in the maximum generable power;
- reduced humid emissions into the environment.

In essence, the Applicant has surprisingly verified that, by using technically pure oxygen instead of air as oxidising gas in a generator with recirculation, the consequent significant reduction of gaseous volumes circulating in the stack does not only allow to attain advantages as those already enunciated, but above all it allows the system to be made completely self-humidified at the expense of water generated by the oxidation reaction, thus eliminating as a whole the traditional humidification systems.

The PEM fuel cell electric generator of the present invention proves to be particularly suited for back-up applications which, inherently, do not work continuously.

Working continuously, the utilization of technically pure oxygen would introduce too great an expense which would not be balanced by the increase in efficiency that is registered, with respect to the use of an oxidising mixture containing oxygen according to the prior art. Opposite, by using the generator as a back-up system in the case of an interruption of current supply to the user, the utilization of technically pure oxygen instead of air proves to be economically advantageous.

Further, the disadvantages generally associated with systems working at high power (e.g. a reduction of the system operational lifetime caused by phenomena due to the high partial pressure of oxygen, the corrosion of the carbon-base support of the catalyst and the degradation of the polymeric membrane) are not detected for this kind of back-up application, for which the operational life-time is of some 1000 hours.

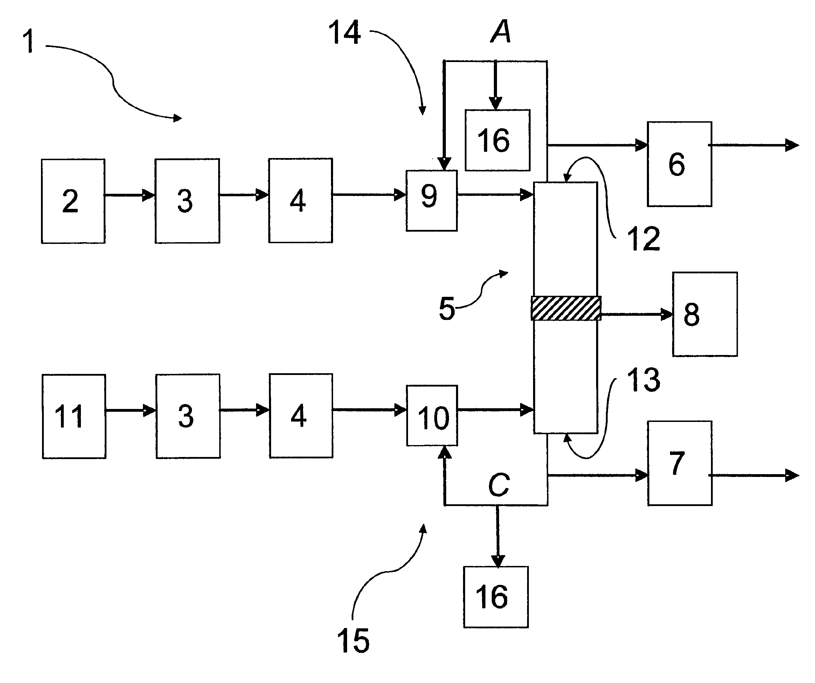

Further characteristics and advantages of the present invention will appear from the following description of a preferred embodiment thereof, given purely as a non-limitative example with reference to the attached figure, which is a schematic representation of a PEM fuel cell back-up generator according to the invention.

In the figure of the attached drawing, there is indicated as a whole with 1 a back-up generator using PEM fuel cells piled in a stack 5 to supply electric energy to a user 8.

There is supplied to generator 1 in stoichometric excess a flow of hydrogen through supply means 2, consisting e.g. of a cylinder of technically pure hydrogen. The flow of hydrogen supplied is enabled by valve means 3, consisting of valves which are manually operated or controlled electronically by a control unit (not shown) in a way known to the person skilled in the art and therefore, for the sake of simplicity, not described herein. Further, the supply pressure of the flow of hydrogen supplied to the stack 5 is regulated by pressure reduction means 4, consisting e.g. of a pressure reducing valve. Flow enabling valve means 3 and pressure reduction means 4 are arranged upstream to the stack 5 with respect to a flow direction of the flow of hydrogen supplied.

There are indicated with 11 in figure means for supplying an oxidising gas. According to an aspect of the present invention, said means for supplying an oxidising gas 11 consist of a pressurised source of pure oxygen, e.g. consisting of a pressurised cylinder. Oxygen is drawn from these means 11 and is supplied in stoichometric excess to the stack 5 by enabling the flow by suitable valve means 3, similar to those described above, consisting of valves which may be manually operated or controlled electronically by a control unit (not shown) in a way known to the person skilled in the art and therefore, for the sake of simplicity, not described herein.

Upstream to the stack 5 of PEM fuel cells, with respect to a flow direction of the flow of oxygen supplied, the generator 1 further comprises pressure reduction means 4 (e.g. a pressure reducing valve), also similar to those used for the hydrogen flow and above described.

In the flow of hydrogen supplied to the stack there is maintained a degree of humidification suitable for the correct operation of the PEM fuel cells by humidification means which, according to the invention, consist exclusively in first recirculation means 14 of a first predetermined portion of the excess flow of hydrogen towards the anode compartment of the PEM fuel cells of stack 5. The first recirculation means 14 are such that the first portion of the excess flow of hydrogen which is re-circulated represents a predetermined part of the flow of hydrogen entering the stack 5, such as to allow the maintaining in the same entering flow of hydrogen a degree of humidification suitable for a correct operation of the fuel cells of the stack.

These first recirculation means 14 consist of at least one ejector 9 arranged immediately upstream to the anode compartment 12 of the stack 5 and such that, when it is flown through by the flow of hydrogen entering the stack, it generates a local depression such as to draw from the stack, through an anode recirculation branch A arranged in parallel to ejector 9, the first predetermined portion of excess hydrogen exiting the anode compartment of the stack. These first recirculation means 14 are such as to carry out a direct mixing of the first portion of the excess hydrogen within the flow of hydrogen entering the stack immediately upstream to the anode compartment, by exploiting exclusively the depression generated by the flow of hydrogen entering the stack 5.

Similarly, in the flow of oxygen supplied to the stack 5 there is maintained a degree of humidification suitable for the correct operation of the PEM fuel cells by humidification means which, according to the invention, consist exclusively in second recirculation means 15 of a first predetermined portion of the excess flow of oxygen towards the cathode compartment of the PEM fuel cells of stack 5. The second recirculation means 15 are such that the first portion of the excess flow of oxygen which is re-circulated represents a predetermined part of the flow of oxygen entering the stack 5, such as to allow the maintaining in the same entering flow of oxygen a degree of humidification suitable for a correct operation of the PEM fuel cells of the stack.

These second recirculation means 15 consist of at least one ejector 10 arranged immediately upstream to the cathode compartment 13 of the stack 5 and such that, when it is flown through by the flow of oxygen entering the stack, it generates a local depression such as to draw from the stack, through a cathode recirculation branch C arranged in parallel to ejector 10, the first predetermined portion of excess oxygen exiting the cathode compartment of the stack.

These second recirculation means 15 are such as to carry out a direct mixing of the first portion of the excess oxygen within the flow of oxygen entering the stack immediately upstream to the cathode compartment, by exploiting exclusively the depression generated by the flow of oxygen entering the stack 5.

Since the mixing occurs within recirculation means 14 and 15 solely exploiting the depression generated by their respective entering flows, it is no longer necessary to resort to pumps or fans to carry out the recirculation as it was done in the prior art. Bulkiness and noisiness of the generator are thus reduced, ensuring at the same time the effective humidification of the flow of the reagent gases.

Preferably, the first portion of excess of hydrogen exiting the anode compartment which is re-circulated is equal to at least approximately 10% of the flow of hydrogen entering the stack 5.

Preferably, the first portion of excess of oxygen exiting the cathode compartment which is re-circulated is equal to at least approximately 10% of the flow of oxygen entering the stack 5.

Generator 1 further comprises purge means 6 and 7 arranged in parallel respectively in the anode recirculation branch A and on the cathode recirculation branch C, suitable for purging from the anode and, respectively, cathode compartments 12 and 13 the non re-circulated excesses of said flows of hydrogen and oxidising gas entering the stack 5. These purge means 6 and 6 may consist of valves manually operated or electronically controlled, or preferably of a pipe provided with a nozzle, which allows the purge to be carried out without using devices comprising machine moving parts.

Further, generator 1 comprises condensate disposal means 16 arranged in parallel to both the anode and cathode recirculation branches (A,C).

Thus, the above described generator 1 is able to carry out a method for obtaining in a back-up PEM fuel cell electric generator, such as generator 1 described above, of the type using PEM fuel cells and comprising a stack of said PEM fuel cells, a degree of humidification of respective flows of hydrogen and of an oxidising gas entering the stack suitable for a correct operation of the PEM fuel cells, wherein the flows of hydrogen and oxidising gas are in stoichometric excess. This method comprises a phase of simultaneous recirculation in parallel of a first predetermined portion of the excess of hydrogen towards the anode compartment of the PEM fuel cells and, respectively, of a first predetermined portion of the excess of oxidising gas towards the cathode compartment of the PEM fuel cells; wherein these first portions of the excess of hydrogen and oxidising gas that are re-circulated represent a predetermined part, preferably equal to at least approximately 10%, of the flow of hydrogen and, respectively, oxidising gas entering the stack; this has in fact proven to be such as to allow the maintaining in the entering flow of a degree of humidification suitable for a correct operation of the PEM fuel cells solely at the expense of water generated by the hydrogen oxidation reaction occurring in the stack.

In order for this method to be fully effective, technically pure oxygen, drawn from a pressurised cylinder, must be supplied to the stack as the oxidising gas.

## Claims

1. PEM fuel cell back-up electric generator (1), comprising:
- a stack (5) of said PEM fuel cells;
- means (2,11) for supplying to the stack hydrogen and an oxidising gas, both pressurised at a predetermined value; wherein said hydrogen and oxidising gas are supplied to the stack (5) in stoichometric excess and said excess is at least partly re-circulated towards the stack; and
- humidification means to maintain in said hydrogen and/or oxidising gas supplied to the stack a degree of humidification suitable for the correct operation of the PEM fuel cells of the stack;
**characterised in that** said humidification means consist exclusively of first recirculation means (14) of a first predetermined portion of said excess of hydrogen towards an anode compartment (12) of the PEM fuel cells and of second recirculation means (15) of a first predetermined portion of said excess of oxidising gas towards a cathode compartment (13) of the PEM fuel cells; said first and second recirculation means (14,15) being such that said first portions of the excess of hydrogen and oxidising gas that are re-circulated represent a predetermined part of the flow of hydrogen and, respectively, oxidising gas entering the stack (5) such as to enable the maintaining in said entering flow of said degree of humidification suitable for a correct operation of the PEM fuel cells of the stack (5) solely at the expense of water generated by the reaction of hydrogen oxidation occurring in said stack; said first and second recirculation means (14,15) operating simultaneously, in parallel.

2. Generator according to claim 1, **characterised in that** said first and second recirculation means (14,15) are such to perform a direct mixing of said first portions of the excess of hydrogen and oxidising gas within said flow of hydrogen and, respectively, oxidising gas, entering the stack (5), immediately upstream to said anode and cathode compartments (12,13).

3. Generator according to claim 2, **characterised in that** said first and second recirculation means consist in ejectors (9,10), arranged immediately upstream to said anode and cathode compartments (12,13) and such to be flown through by said flow of hydrogen and, respectively, of oxidising gas entering the stack (5), which generate a local depression such as to draw from the stack (5), through respective anode and cathode recirculation branches (A,C) arranged in parallel to said ejectors (9,10), said first portions of the excess of hydrogen and oxidising gas exiting the anode and cathode compartments (12,13).

4. Generator according to claim 3, **characterised by** further comprising purge means (6,7) arranged in parallel to said both anode and cathode recirculation branches (A,C), suitable for purging from the anode and cathode compartments (12,13) the non re-circulated excess of said flows of hydrogen and oxidising gas entering the stack (5).

5. Generator according to claim 3, **characterised by** further comprising condensate disposal means (16) arranged in parallel to said both anode and cathode recirculation branches (A,C).

6. Generator according to one of the foregoing claims, **characterised in that** said first portions of the excess of hydrogen and oxidising gas exiting the anode and cathode compartments (12,13) that are re-circulated are equal to at least approximately 10% of the flow of hydrogen and, respectively, oxidising gas entering the stack (5).

7. Generator according to any of the foregoing claims, **characterised in that** said supplying means (11) of said oxidising gas consist in a pressurised source of pure oxygen.

8. Generator according to any of the foregoing claims, **characterised by** further comprising valve means (3) and pressure reduction means (4) of said flows of hydrogen and oxidising gas entering the stack (5), said valve means being arranged immediately downstream to said feeding means (2,11) with respect to a direction of flow of said flows of hydrogen and oxidising gas entering the stack (5).

9. Method for obtaining in a back-up PEM fuel cell electric generator and comprising a stack of said PEM fuel cells, a degree of humidification of respective flows of hydrogen and of an oxidising gas entering the stack suitable for a correct operation of the PEM fuel cells, said flows of hydrogen and oxidising gas being in stoichometric excess, comprising a phase of simultaneous recirculation in parallel of a first predetermined portion of said excess of hydrogen towards an anode compartment of the PEM fuel cells and, respectively, of a first predetermined portion of said excess of oxidising gas towards a cathode compartment of the PEM fuel cells, **characterised in that** said first portions of the excess of hydrogen and oxidising gas that are re-circulated represent a predetermined part of the flow of hydrogen and, respectively, oxidising gas entering the stack, such as to allow the maintaining in said entering flow of said degree of humidification suitable for a correct operation of the PEM fuel cells solely at the expense of water generated by the hydrogen oxidation reaction occurring in said stack.

10. Method according to claim 9, **characterised in that** said first portions of the excess of hydrogen and oxidising gas exiting the anode and cathode compartments that are re-circulated are equal to at least approximately 10% of the flow of hydrogen and, respectively, oxidising gas entering the stack.

11. Method according to claim 9 and/or 10, **characterised in that** said oxidising gas consists of pure oxygen.

12. Method according to any of claims 9 to 11, **characterised by** further comprising a phase of purging the non re-circulated excess of said flows of hydrogen and oxidising gas entering the stack.

13. Method according to any of claims 9 to 12, **characterised by** further comprising a phase of discharging the condensate of said first portions of the excess of hydrogen and oxidising gas re-circulated to the inlet of the stack.
